# EUROPÄISCHE PATENTSCHRIFT

(11) **EP 2 776 757 B1**
(45) Veröffentlichungstag und Bekanntmachung des Hinweises auf die Patenterteilung: **20.01.2016**
(21) Anmeldenummer: 12786928.7
(22) Anmeldetag: 07.11.2012
(51) Int. Cl.: F16L 41/02, B01F 5/04, F22G 5/12

(54) **WASSEREINSPRITZVORRICHTUNG FÜR EIN UMLEITDAMPFSYSTEM EINER KRAFTWERKSANLAGE**
WATER INJECTION DEVICE FOR A BYPASS STEAM SYSTEM OF A POWER PLANT
DISPOSITIF D'INJECTION D'EAU POUR CIRCUIT DE DÉRIVATION DE VAPEUR D'UNE CENTRALE ÉLECTRIQUE

(30) Priorität: 25.01.2012 EP 12152417
(43) Veröffentlichungstag der Anmeldung: 17.09.2014
(73) Patentinhaber: Siemens Aktiengesellschaft, 80333 München (DE)
(72) Erfinder: DEISTER, Frank, 47877 Willich (DE)
(86) Internationale Anmeldenummer: PCT/EP2012/071984
(87) Internationale Veröffentlichungsnummer: WO 2013/110366

(56) Entgegenhaltungen:
- WO-A1-94/17330
- DE-A1- 2 151 910
- DE-A1- 2 907 694
- DE-A1- 19 649 553

## Beschreibung

Die Erfindung betrifft eine Wassereinspritzvorrichtung für ein Umleitdampfsystem einer Kraftwerksanlage, umfassend einen Strömungskanal für Dampf mit einem Dampfeintritt und einem Dampfaustritt, sowie eine zwischen Dampfein- und -austritt angeordnete Einspritzdüse.

Kraftwerksanlagen zur Erzeugung elektrischer Energie nutzen üblicherweise die thermische Energie eines Verbrennungsprozesses zur Erzeugung mechanischer Energie, die dann in einem Generator in elektrische Energie umgewandelt wird. Häufig werden hier direkt befeuerte Dampferzeuger benutzt, die Dampf für eine Dampfturbine erzeugen. Die thermische Energie für die Dampferzeugung kann aber auch aus anderen Quellen wie beispielsweise nuklearer Energie gewonnen werden. Eine andere ohne den Umweg über die Dampferzeugung bietet beispielsweise eine direkte Umsetzung in einer Gasturbine. Auch in diesem Fall werden aber häufig zusätzlich die heißen Abgase der Gasturbine in einem Abhitzekessel zur Dampferzeugung genutzt. Zusammenfassend wird daher in den meisten Kraftwerksanlagen Wasserdampf für die Stromerzeugung genutzt.

Der zum Betrieb der Dampfturbine notwendige Wasserdampf wird in einem Dampfkessel aus zuvor gereinigtem und aufbereitetem Wasser erzeugt. Durch weiteres Erwärmen des Dampfes im Überhitzer nimmt die Temperatur und das spezifische Volumen des Dampfes zu. Vom Dampfkessel aus strömt der Dampf über Rohrleitungen in die Dampfturbine, wo er einen Teil seiner zuvor aufgenommenen Energie als Bewegungsenergie an die Turbine abgibt. An die Turbine ist ein Generator angekoppelt, der die mechanische Leistung in elektrische Leistung umwandelt. Danach strömt der entspannte und abgekühlte Dampf in den Kondensator, wo er durch Wärmeübertragung an die Umgebung kondensiert und sich als flüssiges Wasser an der tiefsten Stelle des Kondensators sammelt. Über die Kondensatpumpen und die Vorwärmer wird das Wasser in einen Speisewasserbehälter zwischengespeichert und dann über die Speisepumpe erneut dem Dampfkessel zugeführt.

In bestimmten Betriebszuständen, beispielsweise beim Anfahren der Dampfturbine oder bei einem Trip, d. h. einer mehr oder weniger unkontrollierten Beschleunigung des Dampfturbinenrotors ist es erforderlich, heißen Dampfstrom an der Turbine zur Reduzierung der Leistung vorbeizuleiten. Da der Kondensator typischerweise nicht für derartig überhitzten Dampf ausgelegt ist, ist dazu ein spezielles Umleitdampfsystem erforderlich, in dem der Frischdampf entspannt und mittels Einspritzen von Wasser abgekühlt wird. Andernfalls könnte der Kondensator beschädigt werden.

Die Wassereinspritzvorrichtung umfasst dabei typischerweise mehrere zwischen ihrem Eintritt und Austritt angeordnete Einspritzdüsen. Diese sind üblicherweise an der Umfassungswand des Dampfkanals der Wassereinspritzvorrichtung angeordnet.

Der Druckschrift DE-2151910 offenbart einen Strömungskanal, wobei eine Wandung von einen Innenwand des Strömungskanals beabstandet angeordnet ist, die den strömenden Dampf in zwei koaxiale Ströme aufteilt, zwischen denen ein Wasseraustritt angeordnet ist.

Es ist nunmehr Aufgabe der Erfindung, eine Wassereinspritzvorrichtung für ein Umleitdampfsystem einer Kraftwerksanlage der eingangs genannten Art anzugeben, die eine besonders gute Kühlwirkung zur Vermeidung von Kondensatorschäden mit technisch besonders einfachen Mitteln aufweist.

Diese Aufgabe wird erfindungsgemäß gelöst, indem die Einspritzdüse an einer sich im Wesentlichen in Richtung des Gasstroms erstreckenden und von einer Innenwand des Strömungskanals beabstandet angeordneten Wandung angeordnet ist, wobei
die Wandung auf ihrer der Innenwand zugewandten Seite ein flaches Profil aufweist. Dadurch wird der Dampfstrom zwischen Innenwand und Wandung minimal behindert und bleibt hinsichtlich seiner Strömungsgeschwindigkeit und Temperatur weitgehend unbeeinflusst. Dies maximiert einerseits die bereits erläuterte Scherschichtbildung, andererseits bleibt so der Bereich an der Innenwand besonders heiß, so dass in Richtung der Innenwand transportiertes Wasser besonders gut verdampft und sich nicht an der Innenwand ungenutzt ablagert.

Die Erfindung geht dabei davon aus, dass eine besonders gute Kühlwirkung dadurch erreicht werden könnte, indem eine homogenere Verteilung des Wassers im Dampfstrahl erreicht werden könnte. Eine homogenere Verteilung führt nämlich zu einer vollständigeren Verdampfung des eingespritzten Wassers und damit zu einer gleichmäßigeren Dampftemperatur am Eintritt des Kondensators. Hierbei wurde erkannt, dass bisher übliche Einspritzung an der Innenwand zwischen Dampfein- und Austritt nachteilig ist, da das am Rand eingespritzte Wasser nicht bis in den Kern des Dampfstrahls vordringt, selbst wenn die Innenwand an der Einspritzstelle verengt ist und näher am Kern des Dampfstromes liegt. Ursache ist die hohe Geschwindigkeit des Dampfes. Daher sollte die Einspritzdüse an einer von der Innenwand beabstandeten Wandung des Strömungskanals angeordnet sein. Dies bedingt eine Position der Einspritzdüse näher am Kern des Dampfstroms, da durch die Zweiteilung des Dampfstroms, bereits ein Teil des Dampfstromes zwischen Wandung und Innenwand hindurchgeführt wird und somit die Düse selbst trotz gleicher Strommenge näher am Kern des Dampfstromes angeordnet ist.

In vorteilhafter Ausgestaltung ist dabei die Einspritzdüse auf der von der Innenwand abgewandten Seite der Wandung angeordnet, d. h. zum Kern der Strömung hin. Dadurch wird einerseits vermieden, dass sich ein Teil des Wassers unverdampft an der Innenwand ablagert und dadurch nicht zur Kühlung beiträgt. Andererseits bleibt der Dampfteilstrom zwischen Wandung und Innenwand ohne Einspritzung und es entsteht ein Temperatur- und Strömungsgeschwindigkeitsunterschied zwischen dem Dampfteilstrom zwischen Wandung und Innenwand und dem Dampfteilstrom jenseits der Wandung. Im Endbereich der Wandung hinter der Einspritzdüse werden diese Dampfteilströme wieder zusammengeführt. Durch den Strömungsgeschwindigkeitsunterschied entsteht hier eine starke Scherschicht, die durch Verwirbelungen eine noch bessere Vermischung von Wasser und den beiden Teilströmen bewirkt.

Vorteilhafterweise ist die Einspritzdüse an einem in Richtung des Dampfeintritts zur Innenwand hin geneigten Abschnitt der Wandung angeordnet ist, d. h. in einem Bereich in dem sich der verfügbare Querschnitt für den auf der der Innenwand abgewandten Seite der Wandung strömenden Dampfteilstrom erweitert. Weiterhin weist die Wandung vorteilhafterweise auf ihrer von der Innenwand abgewandten Seite ein gewölbtes Profil auf, so dass zusammen mit der oben genannten Anordnung der Einspritzdüse diese in Strömungsrichtung hinter der Wölbung angeordnet ist. Hier herrscht eine hohe Dampfgeschwindigkeit und damit ein erniedrigter Dampfdruck, der die Wassereinspritzung begünstigt. Wegen der hohen Dampfgeschwindigkeit wird das Wasser zudem besonders fein zerstäubt.

Vorteilhafterweise bildet die Innenwand einen zylinderförmigen Abschnitt. Eine derartige Ausgestaltung der Wassereinspritzeinrichtung lässt sich besonders einfach konstruieren und ermöglicht durch die radiale Symmetrie einen besonders homogenen Dampffluss.

Analog dazu bildet die Wandung einen zur Innenwand konzentrischen zylinderförmigen Abschnitt, die Wandung bildet demnach einen Zylindermantel und kann z. B. mit entsprechenden Streben an der Innenwand befestigt werden. Die Streben sollten in Strömungsrichtung dabei einen Querschnitt aufweisen, der den Dampfstrom möglichst wenig behindert. In den Streben kann auch die Zufuhr des Einspritzwassers angeordnet sein. Mit der oben genannten Ausgestaltung wird somit der Dampfstrom in einen zentralen Hauptstrom und einen periphären Nebenstrom aufgeteilt. Dadurch bildet auch die Scherschicht eine Zylindermantelform, wodurch aufgrund der Symmetrie eine besonders homogene Vermischung ermöglicht wird.

Zur weiteren Verbesserung der Homogenität der Vermischung werden vorteilhafterweise mehrere Einspritzdüsen radiärsymmetrisch angeordnet.

Ein Umleitdampfsystem für eine Kraftwerksanlage umfasst vorteilhafterweise eine derartige Wassereinspritzvorrichtung und eine Kraftwerksanlage vorteilhafterweise ein derartiges Umleitdampfsystem.

Die mit der Erfindung erzielten Vorteile bestehen insbesondere darin, dass durch die Aufteilung des Dampfstroms und Einspritzung von Wasser in nur einen Teilstrom eine Scherschicht erzeugt wird, die die Durchmischung und Zerstäubung des eingespritzten Wassers durch Filmzerstäubung von beiden Seiten erheblich verbessert und damit eine besonders gute Kühlwirkung im Umleitdampfsystems erreicht wird. Zudem wird durch die hohe Temperatur des an der Innenwand strömenden Dampfteilstroms vermieden, dass sich hier Wasser ablagert.

Die Erfindung wird anhand einer Zeichnung näher erläutert. Darin zeigen:
- FIG 1: eine Wassereinspritzvorrichtung mit an der Innenwand angeordneten Einspritzdüsen nach dem Stand der Technik, und
- FIG 2: eine Wassereinspritzvorrichtung mit an einer von der Innenwand beabstandet angeordneten Wandung angeordneten Einspritzdüsen.

Gleiche Teile sind in allen FIGs mit denselben Bezugszeichen versehen.

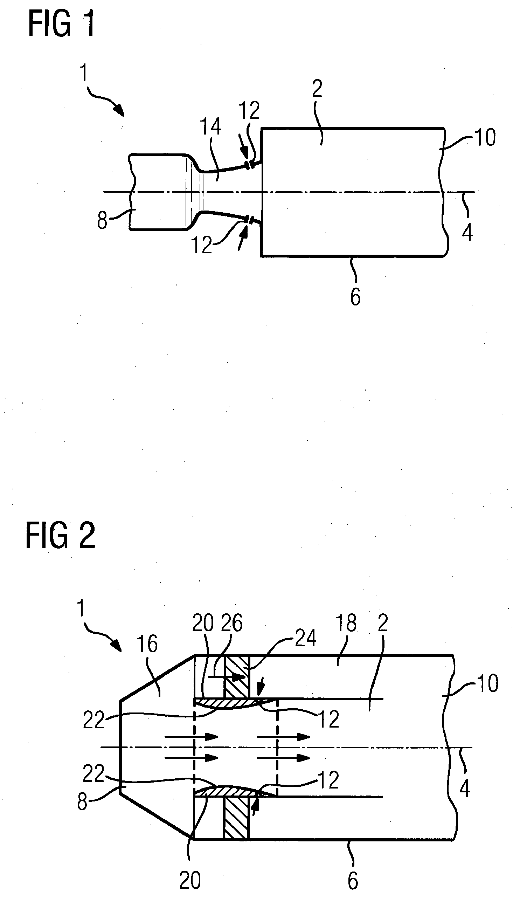

Die Wassereinspritzvorrichtung 1 gemäß FIG 1 umfasst einen Strömungskanal 2, der von einer um eine Achse 4 radialsymmetrisch angeordneten Innenwand 6 eingefasst ist. Der Dampfeintritt 8 befindet sich links in der FIG 1, der Dampfaustritt 10 rechts. Der Querschnitt des Dampfeintritts 8 ist kleiner als der des Dampfaustritts 10. Dadurch wird erreicht, dass der sich hinter der konvergent-divergenten Düse 14 ergebende unterexpandierte Strahl nicht die Innenwand 6 berührt.

Die Wassereinspritzvorrichtung 1 ist Bestandteil eines Umleitdampfsystems einer Kraftwerksanlage, die nicht näher dargestellt ist. Nicht gezeigt ist ein den Dampfeintritt 8 vorgeschaltetes Umleitventil, mit dem Dampfstrom aus dem Dampferzeuger der Kraftwerksanlage an der Dampfturbine vorbei durch das Umleitdampfsystem direkt in den dem Dampfaustritt 10 nachgeschalteten Kondensator geleitet wird. Dies kann in bestimmten Betriebszuständen, z. B. beim Anfahren der Dampfturbine oder nach einem Trip notwendig sein.

In der Wassereinspritzvorrichtung 1 wird der Dampf gekühlt, um ohne Beschädigung des Kondensators in diesen eingeleitet werden zu können. Dazu sind in der Wassereinspritzvorrichtung 1 Einspritzdüsen 12 am Austritt eines sich verengenden Abschnitts 14 angeordnet, die Wasser in den Dampfstrom einspritzen. In der Ausführungsform nach FIG 1 wird dabei trotz der hohen Dampfgeschwindigkeit (typischerweise Überschallgeschwindigkeit) in Abschnitt 14 nicht erreicht, dass das Wasser die Achse 4 und damit den Kern des Dampfstroms erreicht. Zudem erreicht ein Teil des Wassers die Innenwand 6 unverdampft und lagert sich dort ab.

In der Wassereinspritzvorrichtung 1 gemäß der FIG 2 sind die Vermischung des Wassers mit Dampf und die Zerstäubung des Wassers hingegen wesentlich verbessert. In Strömungsrichtung bildet die Innenwand 6 nach dem Dampfeintritt 8 zunächst einen sich erweiternden kegelförmigen Abschnitt 16, an den sich ein zylinderförmiger Abschnitt 18 anschließt. Direkt nach dem Übergang in den zylinderförmigen Abschnitt 18 ist eine im Wesentlichen zylindermantelförmige Wandung 20 von der Innenwand 6 beabstandet und symmetrisch um die Achse 4 angeordnet.

Die Wandung 20 weist ein zur Innenwand 6 hin ein flaches Profil auf. Zur Achse 4 hin ist sie gewölbt. An der dem Dampfaustritt 10 zugewandten Seite der Wölbung 22 sind die Einspritzdüsen 12 radiärsymmetrisch angeordnet. Die Wandung 20 ist mittels Streben 24 an der Innenwand fixiert. Der Querschnitt und das Profil der Streben 24 sind dabei so ausgestaltet, dass der Dampfstrom möglichst wenig behindert wird. In den Streben 24 ist auch die Wasserzufuhr 26 angeordnet.

Durch die in FIG 2 gezeigte Ausgestaltung wird der Dampfstrom in einen Teilstrom zwischen Wandung 20 und Innenwand 6 und einen Teilstrom im Inneren der Wandung 20 geteilt. Wasser wird nur in den inneren Teilstrom eingespritzt, wodurch dieser abkühlt. In Strömungsrichtung hinter der Wandung bildet sich bei der Wiedervereinigung der beiden Teilströme eine Scherschicht 28. Diese sorgt für eine besonders gute Durchmischung der beiden Teilströme und damit auch eine weitere Zerstäubung und Durchmischung des Wassers mit dem Dampf.

## Patentansprüche

1. Wassereinspritzvorrichtung (1) für ein Umleitdampfsystem einer Kraftwerksanlage, umfassend einen Strömungskanal (2) für Dampf mit einem Dampfeintritt (8) und einem Dampfaustritt (10), sowie eine zwischen Dampfein- und -austritt (8, 10) angeordnete Einspritzdüse (12),
wobei die Einspritzdüse (12) an einer sich im Wesentlichen in Richtung des Gasstroms erstreckenden und von einer Innenwand (6) des Strömungskanals (2) beabstandet angeordneten Wandung (20) angeordnet ist, **dadurch gekennzeichnet, dass** die Wandung (20) auf ihrer der Innenwand (6) zugewandten Seite ein flaches Profil aufweist.

2. Wassereinspritzvorrichtung (1) nach Anspruch 1,
bei der die Einspritzdüse (12) auf der von der Innenwand (6) abgewandten Seite der Wandung (20) angeordnet ist.

3. Wassereinspritzvorrichtung (1) nach Anspruch 1 oder 2,
bei der die Einspritzdüse (12) an einem in Richtung des Dampfeintritts (8) zur Innenwand (6) hin geneigten Abschnitt der Wandung (20) angeordnet ist.

4. Wassereinspritzvorrichtung (1) nach einem der vorhergehenden Ansprüche,
bei der die Wandung (20) auf ihrer von der Innenwand (6) abgewandten Seite ein gewölbtes Profil aufweist.

5. Wassereinspritzvorrichtung (1) nach einem der vorhergehenden Ansprüche,
bei der die Innenwand (6) einen zylinderförmigen Abschnitt (18) bildet.

6. Wassereinspritzvorrichtung (1) nach Anspruch 5,
bei der die Wandung (20) einen zur Innenwand (6) konzentrischen zylinderförmigen Abschnitt bildet.

7. Wassereinspritzvorrichtung (1) nach Anspruch 5 oder 6,
bei der mehrere Einspritzdüsen (12) radiärsymmetrisch angeordnet sind.

8. Umleitdampfsystem für eine Kraftwerksanlage mit einer Wassereinspritzvorrichtung (1) nach einem der vorhergehenden Ansprüche.

9. Kraftwerksanlage mit einem Umleitdampfsystem nach Anspruch 8.

## Claims

1. Water injection device (1) for a bypass steam system of a power plant, comprising a flow duct (2) for steam having a steam inlet (8) and a steam outlet (10), and an injection nozzle (12) arranged between the steam inlet and outlet (8, 10),
wherein the injection nozzle (12) is arranged on a partition (20) which extends substantially in the direction of the gas stream and is arranged at a distance from an internal wall (6) of the flow duct (2), **characterized**
**in that** the partition (20) has a flat profile on its side facing the internal wall (6).

2. Water injection device (1) according to Claim 1,
in which the injection nozzle (12) is arranged on that side of the partition (20) which faces away from the internal wall (6).

3. Water injection device (1) according to Claim 1 or 2,
in which the injection nozzle (12) is arranged on a section of the partition (20) which is inclined toward the internal wall (6) in the direction of the steam inlet (8).

4. Water injection device (1) according to one of the preceding claims,
in which the partition (20) has a curved profile on its side facing away from the internal wall (6).

5. Water injection device (1) according to one of the preceding claims,
in which the internal wall (6) forms a cylindrical section (18).

6. Water injection device (1) according to Claim 5,
in which the partition (20) forms a cylindrical section which is concentric with the internal wall (6).

7. Water injection device (1) according to Claim 5 or 6,
in which a plurality of injection nozzles (12) are arranged with radial symmetry.

8. Bypass steam system for a power plant having a water injection device (1) according to one of the preceding claims.

9. Power plant having a bypass steam system according to Claim 8.

## Revendications

1. Dispositif ( 1 ) d'injection d'eau pour un système de dérivation de vapeur d'une centrale électrique, comprenant un canal ( 2 ) d'écoulement de la vapeur ayant une entrée ( 8 ) de la vapeur et une sortie ( 10 ) de la vapeur, ainsi qu'une tuyère ( 12 ) d'injection montée entre l'entrée ( 8 ) de la vapeur et la sortie ( 10 ) de la vapeur,
la tuyère ( 12 ) d'injection étant montée sur une paroi ( 20 ) s'étendant sensiblement dans la direction du courant de gaz et à distance d'une paroi ( 6 ) intérieure du canal ( 2 ) d'écoulement, **caractérisé**
**en ce que** la paroi ( 20 ) a de côté tourné vers la paroi ( 6 ) intérieure un profil plat.

2. Dispositif ( 1 ) d'injection d'eau suivant la revendication 1,
dans lequel la tuyère ( 12 ) d'injection est montée du côté de la paroi ( 20 ) éloigné de la paroi ( 6 ) intérieure.

3. Dispositif ( 1 ) d'injection d'eau suivant la revendication 1 ou 2,
dans lequel la tuyère ( 12 ) d'injection est montée sur une partie de la paroi ( 20 ) inclinée vers la paroi ( 6 ) dans la direction de l'entrée ( 6 ) de la vapeur.

4. Dispositif ( 1 ) d'injection d'eau suivant l'une des revendications précédentes,
dans lequel la paroi ( 20 ) a du côté éloigné de la paroi ( 6 ) intérieure un profil bombé.

5. Dispositif ( 1 ) d'injection d'eau suivant l'une des revendications précédentes,
dans lequel la paroi ( 6 ) intérieure forme une partie ( 18 ) cylindrique.

6. Dispositif ( 1 ) d'injection d'eau suivant la revendication 5,
dans lequel la paroi ( 20 ) forme une partie cylindrique concentrique à la paroi ( 6 ) intérieure.

7. Dispositif ( 1 ) d'injection d'eau suivant la revendication 5 ou 6,
dans lequel plusieurs tuyères ( 12 ) d'injection sont montés à symétrie radiale.

8. Système de déviation de vapeur pour une centrale électrique, comprenant un dispositif ( 1 ) d'injection d'eau suivant l'une des revendications précédentes.

9. Centrale électrique ayant un système de déviation de vapeur suivant la revendication 8.
